Europäisches Patentamt

European Patent Office

Office européen des brevets

(19)

(11) Veröffentlichungsnummer: **0 174 454 B1**

# (12) EUROPÄISCHE PATENTSCHRIFT

(45) Veröffentlichungstag der Patentschrift: **11.12.91**

(21) Anmeldenummer: **85108389.9**

(22) Anmeldetag: **05.07.85**

(51) Int. Cl.5: **F04C 19/00**, F04C 23/00, B01D 19/00, B04C 7/00

(54) **Anordnung zur Minimierung des Kühlflüssigkeitsverbrauches, insbesondere bei Flüssigkeitsring-Vakuumpumpen oder dergleichen.**

(30) Priorität: **12.07.84 DE 3425616**

(43) Veröffentlichungstag der Anmeldung:
**19.03.86 Patentblatt 86/12**

(45) Bekanntmachung des Hinweises auf die
Patenterteilung:
**11.12.91 Patentblatt 91/50**

(84) Benannte Vertragsstaaten:
**AT CH DE FR GB IT LI SE**

(56) Entgegenhaltungen:
**CH-A- 284 884**      **DE-A- 3 149 802**
**DE-A- 3 213 155**    **DE-C- 689 345**
**FR-A- 1 553 943**    **FR-A- 2 180 332**
**US-A- 1 681 574**    **US-A- 2 195 375**
**US-A- 2 971 691**    **US-A- 3 032 258**
**US-A- 3 900 300**

(73) Patentinhaber: **LOEWE Pumpenfabrik GmbH**
**Erbstorfer Landstrasse 12**
**W-2120 Lüneburg(DE)**

(72) Erfinder: **Fink, Werner, Dr.**
**Rathmann-Cohrs-Strasse 9**
**W-2123 Bardowick(DE)**
Erfinder: **Bohn, Heinz**
**Bruchweg 2**
**W-2127 Rullstorf(DE)**

(74) Vertreter: **Struck, Willi, Dr.-Ing.**
**Friedrich-Ebert-Strasse 10f**
**W-2080 Pinneberg(DE)**

**Beschreibung**

Die Erfindung betrifft eine Anordnung zur Minimierung des Kühlflüssigkeitsverbrauches, sowie gegebenenfalls zur Verhinderung von Kavitation, insbesondere bei Flüssigkeitsring-Vakuumpumpen oder dergl.

Es ist bekannt, daß bei Flüssigkeitsring-Vakuumpumpen an der Druckseite der Pumpen immer eine mehr oder weniger große Menge an von der verdichteten und abgeführten Luft mitgerissene Betriebsflüssigkeit austritt, die zur Aufrechterhaltung des Wasserringes und dessen ordnungsgemäßes Arbeiten laufend durch Zuführung neuer Betriebsflüssigkeit ersetzt werden muß. Um die dadurch bedingten Betriebskosten dieser Pumpen in erträglichen Grenzen zu halten, wurde schon vorgeschlagen, hinter den Pumpen in deren Druckleitungen besondere Abscheidebehälter anzuordnen, die die mit der Luft abgeführte Flüssigkeit auffangen und ermöglichen diese wieder in die Pumpen zur laufenden Ergänzung des Wasserringes zurückzuführen.

So ist aus der FR-A-21 80 332 ein einstufiger Abscheidebehälter bekannt geworden, der als einfacher großer Kasten ausgebildet ist und abgesehen von seinem großen Platzbedarf auch keine befriedigenden Ergebnisse für die Abscheidung der Flüssigkeit von der Luft bringt. Auch ein in der FR-A-15 53 943 beschriebener zweistufiger Zyklonabscheider ist material- und platzaufwendig und führt immer noch nicht unerhebliche Flüssigkeitsmengen laufend mit der Luft aus dem System ab, die kostenaufwendig ersetzt werden müssen.

Durch die vorliegende Erfindung sollen diese Mängel der bekannten Flüssigkeitsabscheider bei Wasserring-Vakuumpumpen, nämlich der großen Abmessungen und der unbefriedigenden Abscheidung vermieden und die Aufgabe gelöst werden, bei sehr kleinen Abmessungen der Abscheidebehälter eine optimale Abscheidewirkung und damit eine erhebliche Senkung der Wasserbetriebskosten insbesondere bei Wasserring-Vakuumpumpen zu erreichen.

Zur Lösung dieser Aufgabe wird erfindungsgemäß bei einem Abscheider der eingangs genannten Art vorgeschlagen, in der Abgasleitung der Flüssigkeitsring-Vakuumpumpe einen als zweistufigen Gas-/Flüssigkeits-Separator ausgebildeten Abscheidebehälter anzuordnen, bei dem die erste Stufe ein Zyklonabscheider und die zweite Stufe ein Potentialwirbelabscheider ist. Dabei soll der Zyklonabscheider aus einem Gehäuse mit einem zylindrischen Mantel bestehen, an dem eine tangentiale Zuleitung für das Gas-Flüssigkeitsgemisch und eine Ableitung für die abgeführte Flüssigkeit angebracht sind. Das Gehäuse soll einen geschlossenen Deckelteil und einen Bodenteil aufweisen, an dem eine Abführung für die Betriebsflüssigkeit angeordnet ist und durch den eine Leitung für die Ableitung des Gases aus dem Abscheider hindurchgeführt ist, deren Eintrittsöffnung oberhalb der Ableitung für die abgeführte Flüssigkeit liegt. Der Potentialwirbelabscheider soll als in das Gehäuse des Zyklonabscheiders eingesetztes zylindrisches Gehäuse ausgebildet sein, dessen untere Öffnung im Abscheideraum für die Flüssigkeit unterhalb der Ableitung für die abgeleitete Flüssigkeit liegt und dessen obere Öffnung mit dem Innenraum des Gehäuses durch Leitbleche in Verbindung steht, durch die die Strömung vom Innenraum des Zyklonabscheiders im wesentlichen tangential in den Innenraum des zylindrischen Gehäuses geleitet wird.

An Hand der beiliegenden Zeichnungen soll die Erfindung nachfolgend noch näher erläutert werden. Auf den Zeichnungen zeigen in schematischer Darstellung

    Fig. 1     den Gesamtaufbau einer erfindungsgemäßen Anordnung,

    Fig. 2     einen Vertikalschnitt durch ein Ausführungsbeispiel eines zweistufigen Fliehkraftabscheiders,

    Fig. 3     eine Ansicht von oben auf diesen Abscheider bei abgenommenem Deckelteil,

    Fig. 4     die Anordnung des Temperatur-Meßwertaufnehmers am Abscheider in Seitenansicht und

In den Figuren sind gleiche Teile mit gleichen Bezugszeichen versehen.

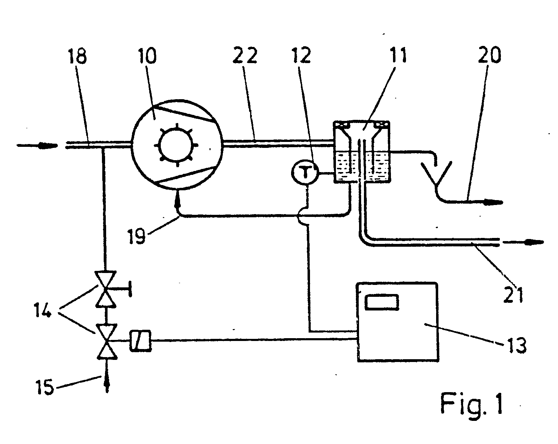

Bei dem Gesamtaufbau einer Anordnung gemäß der Erfindung nach Fig. 1 ist die Flüssigkeitsring-Vakuumpumpe mit 10 bezeichnet, die durch die Vakuumleitung mit dem zu evakuierenden Raum verbunden ist. Die Pumpe 10 fördert ein Gas-Betriebsflüssigkeits-Gemisch durch die Leitung 22 in den Gas-/Flüssigkeitsabscheider 11, von dem ein Teil der abgeschiedenen Flüssigkeit durch die Leitung 20 abgeleitet und ein Teil durch die Betriebsflüssigkeitleitung 19 in die Vakuumpumpe zurückgeführt wird. Das von der Flüssigkeit getrennte Gas wird durch die Abgasleitung 21 abgeführt.

Am Gas-/Flüssigkeits-Abscheider 11 ist ein Temperatur Meßwertaufnehmer 12 angebracht, der im in Fig. 1 dargestellten Beispiel über das Steuergerät 13 mit einem Stellventil 14 mit Voreinstellung in der Frisch- oder Kühlwasserleitung 15 verbunden ist, wobei das Ventil so gesteuert wird, daß durch Zugabe von Kühlflüssigkeit die Temperatur der Betriebsflüssigkeit auf einen konstanten eingestellten Wert geregelt oder optimal für den jeweiligen Betriebspunkt der Pumpe eingestellt wird, was bedeutet, daß bei der optimalen Temperatur der Betriebsflüssigkeit beim Druckregelbetrieb des Vakuumsystems ein Minimum an Kühlflüssigkeit zugeführt wird.

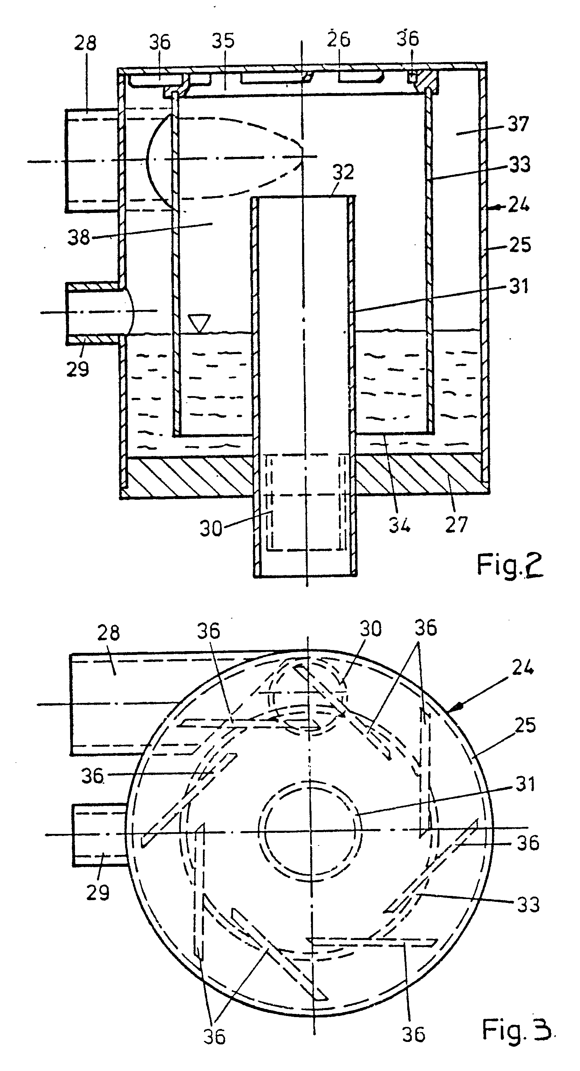

Der Gas-/Flüssigkeitsabscheider ist nun in den Fig. 2 bis 4 in verschiedenen Ansichten vergrößert dargestellt. Er besteht im wesentlichen aus einem allgemein mit 24 bezeichneten Zyklongehäuse, in das ein zylindrisches Innengehäuse 33 eingesetzt ist, in dem mit Hilfe von Leitblechen 36 ein Potentialwirbel erzeugt wird. Es entsteht so ein zweistufiger Fliehkraftabscheider, dessen erste Stufe nach dem Prinzip des Zyklonabscheiders und dessen zweite Stufe als Potentialwirbelabscheider arbeitet.

Der Zyklonabscheider weist einen zylindrischen Mantel 25 mit einem Deckel 26 und einem Boden 27 auf. Am Mantel 25 ist eine tangentiale Zuführung 28 für das aus der Vakuumpumpe kommende Gas-Flüssigkeits-Gemisch angebracht, sowie ein Stutzen 29, durch den die der zugeführten frischflüssigkeitsmenge entsprechende Menge abzuleitender erwärmter Betriebsflüssigkeit abgeführt wird. Dabei kann bei Wasser als Betriebsflüssigkeit die Abführung von dort eventuell gleich in die Kanalisation erfolgen oder bei anderen Flüssigkeiten in eine Kühl- und Aufbereitungsanlage zur Wiederverwendung.

Am Boden 27 ist einmal ein Ablauf 30 für das zur Pumpe zurückzuführende Betriebswasser angebracht und zum anderen eine Leitung 31 zur Abführung des Gases deren Zulauföffnung 32 sich deshalb im Gasraum des Abscheiders befindet.

Der Potentialwirbelabscheider wird durch das zylindrische Innengehäuse 33 gebildet. Dabei wird das im Zyklon- abscheider weitgehend von Flüssigkeit befreite Gas-Flüssigkeits-Gemisch aus dem Ringraum 37 des Zyklon- abscheiders über die am oberen Teil des Abscheiders unterhalb des Deckels 26 angebrachten Leitbleche 36 durch die obere Öffnung 35 des Innengehäuses 33 in den Innenraum 38 dieses Gehäuses eingeführt, wobei sich durch die Leitbleche 36 in diesem Raum ein Potentialwirbel ausbildet, der zur weiteren Separierung des Gases von der Flüssigkeit führt. Die Flüssigkeit läuft dabei an der Innenwand herab und vereinigt sich, da das zylindrische Innengehäuse eine untere Öffnung 34 aufweist, mit der dort schon befindlichen Flüssgkeit aus dem Zyklonabscheider.

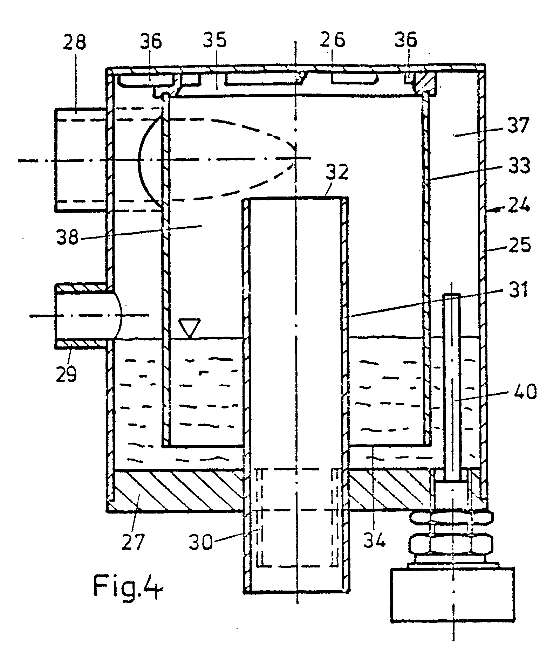

Wie Fig. 4 erkennen läßt, wird der als Tauchtemperaturfühler 40 ausgebildete Temperatur-Meßwertaufnehmer zweckmäßig am Boden 27 des Gas-Flüssigkeitsabscheider befestigt. Eine besonders kompa-kte Ausführung läßt sich erreichen, wenn die Kühlflüssigkeitsleitung 15 und das als Magnetventil mit Voreinstellung 14 ausgeführte Stellventil direkt am Abscheider angebracht sind.

## Patentansprüche

1. Flüssigkeitsring-Vakuumpumpe oder dergl., mit einem Abscheider dadurch gekennzeichnet, daß in der Abgasleitung (21,22) der Pumpe (10) ein als zweistufiger Fliehkraftabscheider ausgebildeter Gas- Flüssigkeits-Separator (11)

mit einem Temperatur-Meßwertaufnehmer (12) im Behälter oder in der Umlaufleitung, der Abgasleitung (21, 22) oder der Vakuumpumpe (10) für .die Betriebsflüssigkeitstemperatur der Flüssigkeitsring-Vakuumpumpe, der über eine Steuereinrichtung mit einem Stellventil (14) in der Kühlflüssigkeitsleitung verbunden ist,

angeordnet ist, bei dem die erste Stufe ein Zyklonabscheider ist, der aus einem Gehäuse (24) mit einem zylindrischen Mantel (25), an dem eine tangentiale Zuleitung (28) für das Gas-Flüssigkeits-Gemisch und eine Ableitung (29) für die abgeführte Flüssigkeit angebracht sind, einem Deckenteil (26) und einem Bodenteil (27) an dem ein Ablauf (30) für die Betriebsflüssigkeit angeordnet ist und durch das eine Leitung (31) für die Ableitung des Gases aus dem Abscheider, deren Eintrittsöffnung (32) oberhalb der Ableitung (29) für die abgeführte Flüssigkeit liegt, hindurchgeführt ist, besteht und die zweite Stufe ein Potentialwirbelabscheider ist, der als in das Gehäuse (24) des Zyklonabscheiders eingesetztes zylindrisches Gehäuse (33) ausgebildet ist, dessen untere Öffnung (34) im Abscheiderraum für die Flüssigkeit unterhalb der Ableitung (29) für abgeleitete Flüssigkeit liegt und dessen obere Öffnung (35) mit dem Ringraum (37) des Gehäuses (24) durch Leitbleche (36), durch die die Strömung vom Innenraum (37) des Gehäuses (24) im wesentlichen tangential in den Ringraum (38) des zylindrischen Gehäuses (33) geleitet wird, in Verbindung steht.

## Claims

1. Liquid ring vacuump pump or suchlike with a separater, whereby in the exhaust pipe (21, 22) of the pump (10) a gas-liquid separator (11), as two-staged centrifugal separator

with a temperature sensor (12) is arranged in the chamber or in the circulation pipe, the exhaust pipe (21, 22) or the vacuum pump (10) for the temperature of the operational liquid of the liquid ring vacuum pump, which is connected, via control device, with an adjusting valve in the cooling liquid pipe,

where the first stage is a cyclone separator consisting of a casing (24) having a cylindrical jacket (25) equipped with a tangential pipe (28) for the gas-liquid mixture and an output (29) for the discharged liquid, a cover (26) and a base (27) provided with a drain (30) for the operational liquid and through which a pipe (31) for exhausting the gas from the separator, whose inlet opening (32) passes through above the output (29) for the discharged liquid, and the second stage is a potential vortex separator is formed as cylindrical casing (33) inside casing (24) of the cyclone separator. The bottom opening (34) of the former is located in the liquid separating area below the output (29) for discharged liquid and the upper opening (35) of which is connected to the annulus (37) of the casing (24) by sheet metal guides (36) by which the flow from the annulus (37) of the casing (24) is guided in the main tangentially into the interior (38) of the cylindric inside casing (33).

**Revendications**

1. Pompe à vide à anneau liquide etc. avec un séparateur caractérisée par la disposition d'un séparateur de gaz et de liquide (11) formant un séparateur à centrifuge à 2 phases dans la conduite d'échappement du gaz (21, 22) de la pompe (10) avec capteur de mesure de la température (12) dans le récipient ou dans la conduite de circulation, la conduite d'échappement (21, 22) ou la pompe à vide (10) pour la température du liquide d'exploitation de la pompe à vide à anneau liquide qui est raccordé par un dispositif de commande à une vanne de réglage (14) dans la conduite de liquide de refroidissement dont la première phase est un séparateur à cyclone se composant d'une carcasse (24) à enveloppe cylindrique (25) sur laquelle est prévue une conduite d'arrivée (28) du mélange de gaz et de liquide et une conduite d'évacuation (29) pour le liquide évacué, d'un plafond (26) et d'un fond (27) sur lequel est monté un égout (30) pour le liquide d'exploitation et à travers lequel est posée une conduite (31) pour l'échappement du gaz en provenance du séparateur dont l'ouverture d'entrée (32) se trouve au-dessus de la conduite d'évacuation (29) pour le liquide évacué et dont la seconde phase est un séparateur à tourbillonnement puissant installé dans la carcasse (24) du séparateur à cyclone en tant que carcasse cylindrique (33) dont l'ouverture inférieure (34) dans l'espace de séparation pour le liquide se trouve en-dessous de la conduite d'évacuation (29) pour le liquide évacué et dont l'ouverture supérieure (35) est raccordée à l'intérieur (37) de la carcasse (24) par tôles de guidage (36) permettant le guidage essentiellement tangentiel du courant de l'espace annulaire (37) de la carcasse (24) à l'intérieur (38) de la carcasse cylindrique (33).

Fig. 1

Fig.2

Fig. 3

6

Fig.4